# EUROPEAN PATENT APPLICATION

(11) **EP 2 833 499 A1**
(43) Date of publication of application: **04.02.2015**
(21) Application number: 13178862.2
(22) Date of filing: 01.08.2013
(51) Int. Cl.: H02H 7/16

(54) **DC-link capacitor protection circuit**

(71) Applicant: Danfoss Power Electronics A/S, 6300 Gråsten (DK)
(72) Inventor: Olsen, Steen Hornsleth, 6400 Soenderborg (DK); Rohwedder, John, 6051 Almind (DK)
(74) Representative: Whiting, Gary

(57) **Abstract**

A DC-link capacitor protection circuit (40) is described having a resistive divider (26, 28) connected in parallel with a series connection of DC link capacitors (22, 24). The mid-points of the DC link capacitors (22, 24) and the resistive divider (26, 28) should have the same voltage, but those voltages will differ in the event of a DC-link capacitor fault (such as a short circuit). The circuit (40) includes a diode bridge (D1-D4) that provides an output (e.g. using an optocoupler (IC1)) when the mid-point voltages differ by more than a defined amount. In response to that output from the diode bridge (D1-D4), an input stage for charging the DC link capacitors is deactivated.

## Description

### FI ELD OF THE I NVENTI ON

The present invention relates to the protection of DC-link capacitors, for example for use in motor drives.

### BACKGROUND OF THE I NVENTI ON

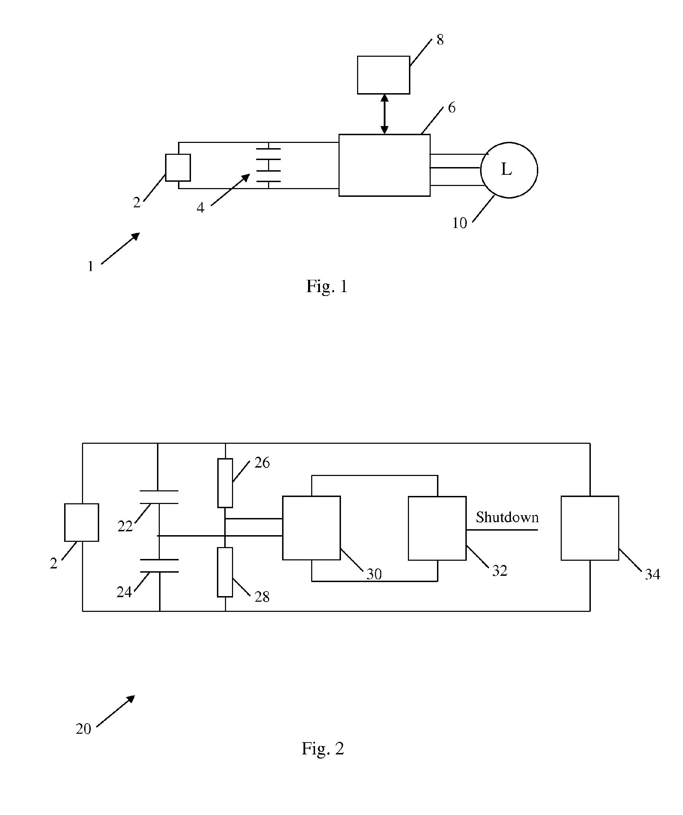

Figure 1 is a block diagram of a system, indicated generally by the reference numeral 1 , in which the present invention may be used.

The system 1 comprises an input 2, a series-connected pair of DC link capacitors 4, an inverter 6, a controller 8 and a load 10. In many circumstances, the load 10 is a motor, but other applications are possible. For example, the load 10 may be an electrical grid.

In a typical motor drive application, the input 2 is likely to be an AC grid and a rectifier that are used to charge the DC link capacitors 4. In a solar inverter application, the input 2 will comprise a number of photovoltaic cells.

As is well known in the art, the inverter 6 comprises a number of switches (typically I GBTs) that are used to switch the DC voltage stored across the DC link capacitors 4 under the control of the controller 8 is order to generate an AC signal for provision to the load 10. The load may have multiple phases (3 phases are shown in Figure 1).

The DC voltage stored across the DC link capacitors 4 can be very high: values of the order of 800 to 900 volts are common. It is difficult (and expensive) to provide a single capacitor that can withstand such a high voltage, hence the use of two capacitors in the arrangement shown in Figure 1.

A fault can occur with one of the capacitors 4 that causes the capacitor to short-circuit. Such a fault results in the entire DC link voltage appearing across a single capacitor. Providing such a high voltage across a single capacitor can lead to that capacitor being damaged, perhaps catastrophically. Fires and explosions can be caused in such a scenario.

There is a need to provide a simple and effective arrangement for preventing the charging of the DC link capacitors 4 in the event of a short-circuit fault to one of those capacitors.

In addition to being advantageous to prevent problems during the normal operation of the system 1 , some safety certification bodies require a motor drive to be able to withstand the deliberate short-circuiting of one of a pair of DC link capacitors.

The present invention seeks to address at least some of the problems outlined above.

### SUMMARY OF THE I NVENTI ON

The present invention provides an apparatus (e.g. a circuit) comprising: a series connection of DC link capacitors having a mid-point that provides a first voltage signal; a resistive divider connected in parallel with the DC link capacitors, the resistive divider having a mid-point that provides a second voltage signal; a diode bridge connected to the first and second voltage signals and configured to pass a current when a voltage difference in excess of a threshold exists between the first and second voltage signals; and an output stage configured to provide a shutdown signal in response to a current flowing in the diode bridge.

The present invention further provides a method (e.g. for the protection of DC link capacitors) comprising: using a diode bridge to indicate a voltage difference in excess of a threshold between a first voltage signal and a second voltage signal, wherein the first voltage signal is a mid-point of a series connection of DC link capacitors and the second voltage signal is a mid-point of a resistive divider connected in parallel with the DC link capacitors; and providing a shutdown signal in response to the indication, by the diode bridge, of said voltage difference. The voltage difference is typically indicated by a current flowing in the diode bridge.

The threshold may be set by a Zener diode, such that, in the event that the voltage difference between the mid-point of the DC link capacitors and the mid-point of the resistive divider is sufficiently large to activate the Zener diode, a current flows in the diode bridge.

In the normal operation mode of the invention, the mid-points of the DC link capacitors and the resistive divider should have the same voltage, but those voltages will differ in the event of a DC-link capacitor fault (such as a short circuit). The circuit includes a diode bridge that provides an output (e.g. using an optocoupler) when the mid-point voltages are sufficiently different.

The use of a diode bridge is advantageous since, in the normal operation mode, the diode bridge does not draw any current. Accordingly, the efficiency of the circuit is not adversely affected by the presence of the diode bridge in the normal operation mode.

In some forms of the invention, the shutdown signal is latched (for example using a latch circuit that may include a pair of transistors) such that once set in response to the detection of the voltage difference, the shutdown signal remains set if the voltage difference ceases to exist.

An optocoupler may be provided such that the current flowing in the diode bridge activates the optocoupler. The said optocoupler may have an output that forms part of the output stage. Using an optocoupler provides a degree of separation between the diode bridge and the output stage of the circuit.

An input stage may be provided for charging the series connection of DC link capacitors. In many forms of the invention, the input stage is deactivated in response to the shutdown signal.

### BRI EF DESCRI PTI ON OF THE DRAWINGS

The invention will now be described in further detail with reference to the following schematic drawings, in which:
Figure 1 is a block diagram of a system in which the present invention may be used;
Figure 2 is a highly schematic block diagram of a system in accordance with an aspect of the present invention;
Figure 3 is a circuit schematic in accordance with an aspect of the present invention; and
Figure 4 is a flow chart demonstrating the functionality of a system in accordance with an aspect of the present invention.

### D ETAI LED D ESCRI PTI ON OF THE I NVENTI ON

Figure 2 is a highly schematic block diagram of a system, indicated generally by the reference numeral 20, in accordance with an aspect of the present invention. The system comprises the input 2 (as described above), a first capacitor 22 and a second capacitor 24 connected in series (implementing the DC link capacitors 4 described above), a first resistor 26 and a second resistor 28 connected in series with one another (to form a resistive divider) and in parallel with the capacitors 22 and 24, a voltage difference detector stage 30, an output stage 32 and a circuit 34. The output stage 32 provides a Shutdown signal.

The circuit 34 may, for example, com prise the inverter 6, controller 8 and load 10 described above with reference to Figure 1. The circuit 34 is provided in parallel with the capacitors 32 and 34 and, in use, the voltage across the capacitors 32 and 34 is used as a DC input to the circuit 34.

The mid-point of the capacitors 22 and 24 provides a first input to the voltage difference detector stage 30. Similarly, the mid-point of the resistors 26 and 28 provides a second input to the voltage difference detector stage. The resistors 26 and 28 have the same resistance such that, in the normal operation of the system 20, the mid-point of the capacitors 22 and 24 is at the same voltage as the mid-point of the resistors 26 and 28. Thus, in the normal mode, the first and second inputs to the voltage difference detector stage 30 are at the same voltage.

As described in detail below, the voltage difference detector stage 30 comprises a diode bridge. When the first and second inputs to the diode bridge are at the same voltage, no current flows in the diode bridge. As a result, the output stage 32 is not driven and the Shutdown output of the output stage 32 is not activated. **I**n this condition, the system 20 is effectively the same as the system 1 described above.

In the event of a short-circuit failure to one of the capacitors 22 and 24, a potential voltage difference is generated between the first and second inputs to the voltage difference detector stage 30. As described in detail below, if this voltage is above a threshold, a current is caused to flow in the diode bridge of the voltage difference detector stage, which activates the output stage 32. The activation of the output stage 32 causes the Shutdown output to be set. Thus, the flow of current in the diode bridge indicates the existence of a voltage difference above the threshold between the mid-point of the first and second resistors 26 and 28 and the mid-point of the first and second capacitors 22 and 24.

In response to the setting of the Shutdown output, the input 2 is disconnected from the DC link capacitors 22 and 24 (for example by deactivation the rectifier of an AC supply/rectifier input stage). Thus, the DC link capacitors are not charged and the system 20 is deactivated and made safe.

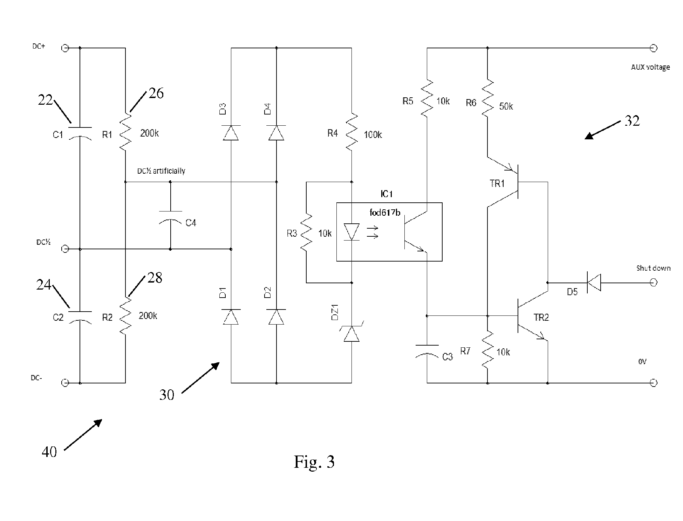

Figure 3 is a circuit schematic, indicated generally by the reference numeral 40, in accordance with an aspect of the present invention. The circuit 40 shows an exem plary im plementation of the voltage difference detector stage 30 and output stage 32 described above. The circuit 40 is provided by way of example only: the skilled person will be aware of alternative possible implementations.

The circuit 40 includes the capacitors 22 and 24 (also labelled C1 and C2 in Figure 3) and resistors 26 and 28 (also labelled R1 and R2 in Figure 3) described above with reference to Figure 2.

The mid-point of the capacitors 22 and 24 is labelled DC1/2. The mid-point of the resistors 26 and 28 is labelled DC1/2 artificially. A third capacitor C4 is provided between the m id-points DC1/2 and DC1/2 artificially.

The circuit 40 includes the diode bridge of the voltage difference detector stage 30, which comprises a first diode D1, a second diode D2, a third diode D3 and a fourth diode D4. The cathode of the first diode D1 and the anode of the third diode D3 are both connected to the mid-point of the capacitors DC1/2. The cathode of the second diode D2 and the anode of the fourth diode D4 are both connected to the mid-point of the resistive divider DC1/2 artificially. The voltage difference detector stage 30 also comprises a third resistor R3, a fourth resistor R4, an optocoupler IC1 and a Zener diode DZ1.

The anodes of the first and second diodes are both connected to the anode of the Zener diode DZ1. The cathodes of the third and fourth diodes are both connected to a first terminal of the fourth resistor R4.The second terminal of the fourth resistor R4 is connected to an anode of a light-emitting diode that forms part of the optocoupler IC1. The cathode of the light-emitting diode of the optocoupler IC1 is connected to the cathode of the Zener diode DZ1. The third resistor R3 is connected between the anode and cathode of the light-emitting diode of the optocoupler IC1.

In the normal operation of the circuit 40, there is no voltage difference between the midpoint of the capacitors 22 and 24 and the mid-point of the resistive divider. If there is no voltage difference, all of the diodes of the diode bridge are non-conducting and so no current flows in the diode bridge. As a result, no current flows through the optocoupler IC1, such that the LED of that optocoupler remains off.

In the event that the first capacitor C1 is short circuited, the mid-point of the capacitors DC1/2 is pulled higher than the mid-point of the resistive divider DC1/2 artificially. As a result, a current flows through the third diode D3, the fourth resistor R4, the optocoupler IC1, the Zener diode DZ1 and the second diode D2 to the second capacitor 24.

Similarly, in the event that the second capacitor C2 is short-circuited, the mid-point of the capacitors DC1/2 is pulled lower than the mid-point of the resistive divider DC1/2 artificially. As a result, a current flows through the fourth diode D4, the fourth resistor R4, the optocoupler IC1, the Zener diode DZ1 and the first diode D1 to the first capacitor 22.

Thus, in the event that there is a voltage difference between the mid-point of the capacitors and the mid-point of the resistive divider that is sufficient to activate the Zener diode DZ1 , a current flows through the optocoupler IC1. Thus, when either capacitor is short-circuited, a current flows through the optocoupler.

It follows that the activation of the light-emitting diode of the optocoupler IC1 is an indication of a voltage difference above the threshold between the mid-points of the resistive divider and the DC link capacitors. Thus, the activation of the light-emitting diode of the optocoupler IC1 is an indication of fault with one of the capacitors 22 and 24. For reasons that are explained in detail below, in the exemplary circuit 40, the output of the optocoupler IC1 does not itself provide the Shutdown signal (although it could in some alternative embodiments of the invention).

It should be noted that the diode bridge of the voltage difference detector stage 30 has the effect of rectifying the voltage difference between the mid-point of the capacitors 22 and 24 and the mid-point of the resistors 26 and 28 so that the current flowing through the optocoupler IC1 has the same polarity regardless of which of the capacitors 22 and 24 has a short-circuit fault.

I n the circuit 40, the Shutdown signal is output by the output circuit 32. The output circuit 32 comprises a fourth capacitor C3, fifth, sixth and seventh resistors R5, R6 and R7, a first transistor TR1 , a second transistor TR2 and a fifth diode D5. The first transistor TR1 is a pnp bipolar transistor: the second transistor TR2 is an npn bipolar transistor.

The first terminal of the fifth and sixth resistors R5 and R6 are connected to a DC power supply Aux voltage. The second terminal of the fifth resistor R5 is connected to the collector of an npn bipolar transistor of the optocoupler IC1. The second terminal of the sixth resistor R6 is connected to the emitter of the first transistor TR1. The emitter of the transistor of the optocoupler is connected to a first terminal of the fourth capacitor C3, a first terminal of the seventh resistor R7, the collector of the first transistor TR1 and the base of the second transistor TR2. The second terminals of the fourth capacitor C3 and the seventh resistor R7 are connected to the emitter of the second transistor TR2 and to ground. The base of the first transistor TR1 is connected to the collector of the second transistor TR2 and to the cathode of the diode D5. The anode of the diode D5 provides the Shutdown output.

In the normal mode of the system 40, no current flows in the diode bridge so that no light is emitted by the LED of the optocoupler. Accordingly, the transistor of the optocoupler is off and, as a result, the first and second transistors are both turned off.

When a current flows in the diode bridge such that the LED of the optocoupler shines, the transistor of the optocoupler is turned on, which results in current flowing to the base of the npn transistor TR2. In response, the second transistor TR2 is turned on, which pulls the base of the first transistor TR1 low, thereby turning on the first transistor TR1.

At this stage, current flows from the Aux voltage power supply to the second transistor TR2 via the first transistor TR1 , such that the first and second transistors are locked in a conducting state, even if the optocoupler stops providing a signal.

The Shutdown signal is set when the second transistor TR2 is turned on and so the detection, by the diode bridge, of a voltage difference between the voltage potentials DC1/2 and DC1/2 artificially results in the Shutdown signal being set.

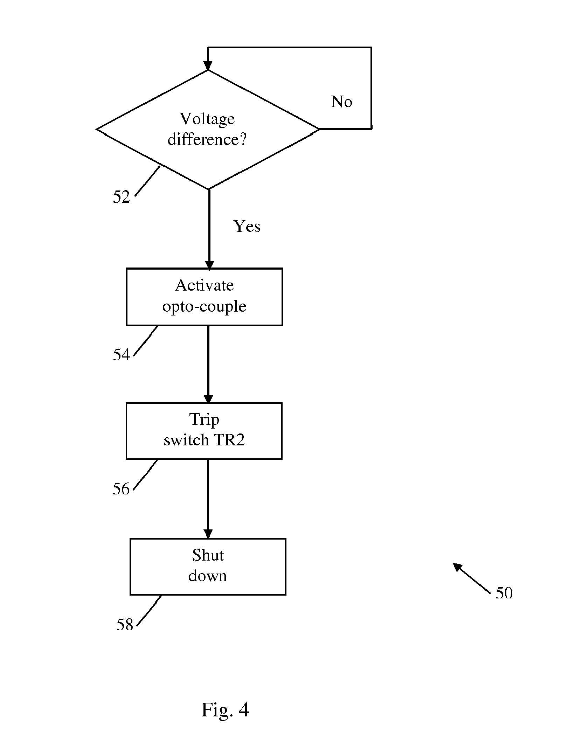

Figure 4 is a flow chart demonstrating an algorithm, indicated generally by the reference numeral 50, accordance with an aspect of the present invention. The algorithm 50 is provided by way of example only: the skilled person will be aware of alternative possible implementations.

The algorithm 50 starts at step 52 where it is determined whether there is a difference between the mid-point of the capacitors 22 and 24 and the mid-point of the resistors 26 and 28. If not, the step 52 is simply repeated. When a difference of greater than a set threshold is detected, the algorithm 50 moves to step 54. In the exemplary circuit 40, the threshold is set largely by the value of the Zener diode DZ1.

In the exemplary circuit 40 described above, the voltage difference is detected by the voltage difference detector stage 30. The voltage difference detector stage makes use of a diode bridge, which is advantageous since, in the normal operation of the circuit 40 (when there is no voltage difference detected in the step 52), the diode bridge does not draw any current. Accordingly, the efficiency of the circuit is not affected by the presence of the diode bridge in the normal operation of the circuit 40.

It should be noted that the specific configuration of the diode bridge is not essential to all embodiments of the present invention. For example, the use of four diodes, connected as shown, is not essential.

At step 54, the LED of the optocoupler IC1 is activated, which in turn activates the transistor of the optocoupler.

Next, at step 56, the second transistor TR2 is turned on, which activates the Shutdown signal and also activates the first transistor TR1 , thereby latching the transistors TR1 and TR2. As described above, the transistors TR1 and TR2 are latched in a conducting state, even if the optocoupler stops providing a signal.

Finally, at step 58, the activation of the Shutdown signal causes an input stage used to charge the DC link capacitors to be deactivated. The output circuit operates independently of the DC link voltage. Thus, the DC voltage Aux voltage is not dependent on the DC link voltage. If the capacitors 22 and 24 are no longer charged when a capacitor short-circuit fault is detected, then the DC link voltage will fall, eventually to a level below that required to activate the LED of the optocoupler IC1. In that event, the Shutdown output of the output circuit 32 remains activated due to the latching of the transistors TR1 and TR2.

The embodiments of the invention described above are provided by way of example only. The skilled person will be aware of many modifications, changes and substitutions that could be made without departing from the scope of the present invention. For example, the present invention is not limited to use with an AC supply; a DC supply (e.g. from a photovoltaic array) may be stored across a DC link capacitor, with that capacitor being protected as described above. Further, the optocoupler IC1 could be replaced with any suitable means for coupling the diode bridge 30 and the output stage 32. The claims of the present invention are intended to cover all such modifications, changes and substitutions as fall within the spirit and scope of the invention.

## Claims

1. An apparatus comprising:
a series connection of DC link capacitors having a mid-point that provides a first voltage signal;
a resistive divider connected in parallel with the DC link capacitors, the resistive divider having a mid-point that provides a second voltage signal;
a diode bridge connected to the first and second voltage signals and configured to pass a current when a voltage difference in excess of a threshold exists between the first and second voltage signals; and
an output stage configured to provide a shutdown signal in response to a current flowing in the diode bridge.

2. An apparatus as claimed in claim 1, wherein the output stage comprises a latch circuit such that once set in response to the current flowing in the diode bridge, the shutdown signal remains set if the current in the diode bridge ceases to flow.

3. An apparatus as claimed in claim 1 or claim 2, further comprising an optocoupler configured such that the current flowing in the diode bridge activates the optocoupler.

4. An apparatus as claimed in claim 3, wherein the optocoupler has an output that forms part of the output stage.

5. An apparatus as claimed in any preceding claim, further comprising a Zener diode that sets the said threshold.

6. An apparatus as claimed in any preceding claim, further comprising an input stage for charging the series connection of DC link capacitors, wherein the input stage is deactivated in response to the shutdown signal.

7. A method comprising:
using a diode bridge to indicate a voltage difference in excess of a threshold between a first voltage signal and a second voltage signal, wherein the first voltage signal is a mid-point of a series connection of DC link capacitors and the second voltage signal is a mid-point of a resistive divider connected in parallel with the DC link capacitors; and
providing a shutdown signal in response to the indication, by the diode bridge, of said voltage difference.

8. A method as claimed in claim 7, wherein said voltage difference is indicated by a current flowing in the diode bridge.

9. A method as claimed in claim 7 or claim 8, further comprising latching the shutdown signal such that once set in response to the detection of the voltage difference, the shutdown signal remains set if the voltage difference ceases to exist.

10. A method as claimed in any one of claims 7 to 9, further comprising deactivating an input stage for charging the series connection of DC link capacitors in response to the shutdown signal.
